# EUROPEAN PATENT APPLICATION

(11) **EP 1 271 434 A1**
(43) Date of publication of application: **02.01.2003**
(21) Application number: 01202229.9
(22) Date of filing: 11.06.2001
(51) Int. Cl.: G07F 19/00, G06F 17/60

(54) **Method and system for payment**

(71) Applicant: CMG Finance B.V., 1183 AC Amstelveen (NL)
(72) Inventor: Kreuk, Jacobus Johannes Cornelis, 1141 AR Monnickendam (NL)
(74) Representative: Jorritsma, Ruurd

(57) **Abstract**

Method and system for payment of a service and/or product from a service provider (12) by a user, comprising the steps of a) receiving from a bank provider (16) associated with the user an information message, the information message comprising a user-defined key, b) receiving from the service provider (12) a payment request comprising the user-defined key and c) processing the payment request. The router (14) performs these steps and routes the payment requests and further messages which are identified by the user-defined key. The method and system may be used by a user for both high value payments and micro-payments (small amount). For the micro-payments the router also performs the function of aggregating the micro-payments.

## Description

The present invention relates to payment mechanisms in order to pay for services or products from a service/product provider.

Known payment methods comprise either mechanisms for high value payments (such as credit card payments requiring a signature of the user/buyer and an authorisation of the credit card company) or small value payments (such as telephone debit cards, which are paid in advance and are usually limited to a single application). In these mechanisms, usually a face to face contact must exist between the user and the service provider or merchant. A general solution which allows a user to pay for both high value payments and payments of small amounts of money in situations that the user and service provider are not able or not willing to have face to face contact is lacking. These situations arise e.g. when purchases are made using the Internet or by wireless means (I-mode, WAP, SMS). Also, the known payment mechanisms are initiated by the user (paying party), e.g. through cash, debit card, credit card, cheques, etc.

Furthermore, the known payment methods have a number of disadvantages associated therewith. A major problem is possible fraud in a number of occasions. A possible fraud item is the identification and authentication of a user when there is no face to face contact, allowing a person to commit fraud by entering e.g. stolen credit card information when completing a payment instruction on the Internet. Also, payment instructions are generally known to the service provider, allowing the service provider to commit fraud by charging for services that have not been requested by anyone sending payment instructions to the issuing bank. It is also possible that hackers retrieve this kind of information and commit fraud. A third case of possible fraud comes from bouncing of payments: the service provider sends a bill for the service or product, but the buyer refuses to pay.

Also, in known methods, the user has to fill in all payment details each time he orders a product or service, and the service provider has to maintain an administration for all its debtors. Both require considerable effort, which may lead to possible loss of interest at both parties.

Known payment methods are usually restricted to use where both buyer and service provider accept the same (proprietary) solution. This may lead to a required participation by the service provider in many different payment methods, which is far from effective. Also, when use is made of a proprietary payment method, the service may be only available to a limited user group. In some payment methods, investments are required in additional hardware, such as card readers, which also limits the acceptance by service providers.

For some payment methods, the cost of processing a payment is higher than the value of the payment itself (micro-payment). This will lead to the effect that some services will not be realised and made available to the public at large.

For some buyers it is a prerequisite to be anonymous to the service provider for a number of possible reasons. With known payment methods this is not possible.

Finally, with known payment methods, especially when use is made of Trusted Third Parties to deal with payments, it is very complex to reverse a transaction when required (e.g. when a prepaid concert ticket is cancelled).

The present invention thus seeks to provide a payment method which is suited for both small and large payments, which is secure and easy to implement, and which doesn't have the above mentioned disadvantages.

For this, the present invention provides a method according to the preamble, in which the method comprises the steps of a) receiving from a bank provider associated with the user an information message, the information message comprising a user-defined key, b) receiving from the service provider a payment request comprising the user-defined key and c) processing the payment request.

In the present method, which is indicated by applicant using the acronym JACOB, the user-defined key is provided by the paying party, i.e. the user. This allows abandoning the need to create a billing relationship between the service provider/merchant and user as the service provider no longer needs to have knowledge on the specific payment instructions of the user.

In further embodiments, the information message further comprises at least one payment category and for each payment category at least one associated payment method. The at least one payment category is selected from the group comprising high value payments, mobile micro-payments, Internet micro-payments and crediting payments, and the at least one associated payment method may be a credit card account or a debit account. This allows a paying party or user to choose the payment method in the process. Also, the user-defined key may comprise a telephone number and optionally a PIN-code, or a user-identification and a password. The telephone number and optional PIN-code may be used advantageously in wireless payments, while the user-identification and password may be used advantageously in Internet payments.

By storing all payment requests by the router/aggregator it is possible to find back payment records, which may e.g. be used advantageously in reversing payments.

In a further embodiment, the payment request further comprises an amount to be paid and a bank account of the service provider, and the step of processing the payment request comprises the steps of c1) sending an acknowledgement message to the user using the user-defined key to address the user, the acknowledgement message comprising the amount, and selectable payment methods associated with the user-defined key, c2) after receiving a first acknowledgement and/or the selection of payment method from the user, sending a payment instruction to a banking provider associated with the selected payment method, the payment instruction comprising the amount, selected payment method and the bank account of the service provider, and c3) after receiving a second acknowledgement from the banking provider, sending a third acknowledgement to the service/product provider and/or user. This embodiment is advantageously used for high value payments.

In this embodiment, the payment request, acknowledgement message and/or payment instruction may further comprise a description of the service and/or product. This will allow easier retrieval of payments for reversing payments, and also enhances the identification of a certain payment.

The acknowledgement message may be communicated to the user using at least one SMS message or using WAP communication. This allows the user to use a mobile telephone to use the present payment method. Also other communication methods may be used.

To enhance the safety and reliability of the payment method, step c2) may comprises the further steps of receiving an identification from the user and checking whether the user-defined key and identification are associated. When using SMS messages, the telephone number of the user terminal used may be extracted form the SMS message received in reply from the user. When using WAP communication, the telephone number may be retrieved using known techniques such as Calling Line Identification (CLI).

A further embodiment of the present method may be advantageously used to implement micro-payments. In this embodiment, the method comprises the further step of a1) after receiving the information message sending a verification list to the at least one service provider by the router/aggregator, the verification list comprising user-defined keys which are allowed to order services from the at least one service provider; the payment request further comprising an amount to be paid and a provider account; and the step of processing the payment request comprises the steps of c1) aggregating payments on payment methods associated with the user-defined key, c2) aggregating payments on provider accounts, c3) settling the aggregated payments by sending payment instructions to banking providers associated with the payment methods and provider accounts. The step c3 may furthermore be executed once a predetermined amount has been reached or a predetermined time period has lapsed. The step c3 may advantageously be executed using a temporary account. As in the high value payments, the payment request and/or payment instruction may further comprise a description of the service and/or product.

From the viewpoint of a banking provider enabling the present payment method, the method comprises the steps of a) identifying and authenticating the user by a bank provider, b) receiving from the user by the bank provider a user-defined key, c) receiving from the user by the bank provider at least one payment method for each of at least one payment category, d) sending an information message to a router, the information message comprising the user-defined key, and e) receiving a payment instruction from the router and executing the payment instruction.

Also in this case, the information message may further comprise at least one payment category and for each payment category at least one associated payment method. The at least one payment category is selected from the group comprising high value payments, mobile micro-payments, Internet micro-payments and crediting payments, and the at least one associated payment method may be a credit card account or a debit account. Also, the user-defined key may comprise a telephone number and optionally a PIN-code or a user-identification and a password.

When initialising or altering the settings of the payment method by the user, the method may further comprise the step of receiving a desired communication method for communication with the router, the desired communication message being included in the information message. This way, the user may indicate whether he wants to receive payment request information e.g. using voice response messages, SMS messages or via WAP communication.

From the view point of the service provider using the present payment method, especially for micro-payments, the method comprises the steps of a) receiving a verification list from a router, the verification list comprising at least one user-defined key, b) receiving a service/product request and a user-defined key from a user, c) checking whether the user-defined key is on the verification list, d) upon verification of the user-defined key d1) providing the service/product to the user, d2) sending a payment request to the router, the payment request comprising the user-defined key, an amount, and a provider account number of the at least one service/product provider.

Also in this case, the information message may further comprise at least one payment category and for each payment category at least one associated payment method. The at least one payment category is selected from the group comprising high value payments, mobile micro-payments, Internet micro-payments and crediting payments, and the at least one associated payment method may be a credit card account or a debit account. Also, the user-defined key may comprise a telephone number and optionally a PIN-code or a user-identification and a password.

In a further aspect, the present invention relates to a software program comprising computer executable instructions, the computer executable instructions comprising the steps of the present payment method. This relates to the methods for the aggregator/router, the banking provider and the service provider.

In an even further aspect, the present invention relates to a software program product comprising computer readable instructions, which when loaded on a processing system allows the processing system to execute the present payment method. The processing system then can take the role from either the aggregator/router, banking provider or service provider. A processing system in this sense is understood to be e.g. a general computer system, such as a personal computer or a server computer.

Also, the present invention in a still further aspect relates to a payment system comprising processing means, storage means, and interface means, in which the processing means, storage means and interface means are arranged to execute the present payment method. The payment system comprises various means to allow the required interactions between the parties involved in the present payment method, i.e. a number of user terminals, an aggregator/router, a number of service providers and a number of banking providers.

The present invention will be clarified now using a number of examples of (parts) of the present method for making payments, with reference to the accompanying drawing, in which the Figure shows a schematic diagram of the parties involved in the payment method and their interactions.

In the present payment method, a number of parties are involved. A user wants to buy a product or a service from a service/product provider 12 (in the following the term service provider 12 will be used). The service provider 12 may in some examples be a portal, i.e. not providing the product or service directly to the user, but via further service providers 12, e.g. a mobile portal providing services by connecting to different service providers (news information, flower shop).

The user must have access to a user terminal 14 to be able to use the present method. This user terminal 14 may be a mobile telephone, or a personal computer. Furthermore, a number of banking providers 16 is present. A user may have one or more accounts with his associated banking provider 16. Also, the service provider 12 has a banking provider 16 associated with it, where the service provider 12 has an account. The central party in the present method is the router/aggregator 10, the functions of which may be executed by an intermediate partner, or by a banking company.

The various parties identified above may communicate with each other in specific ways. The user terminal 14 may communicate with a banking provider 16 by means of a secure link 1. As an alternative, the information from the user may be provided to an employee of the banking provider 16 orally. Also the communication between banking provider 16 and router/aggregator 10 and between router/aggregator 10 and service provider 12 may be implemented using a secure link 2 and 3, respectively. The connection 4 between user terminal 14 and service provider 12 may be personal (e.g., the user orally informing an employee of the service provider 12 of his user-defined key) or physical (e.g. using a mobile telephony connection, an Internet connection, or a local wireless communication such as Bluetooth). The communication 5 between router/aggregator 10 and user terminal 14 is dependent on the type of user terminal 14: in case of a mobile telephone, the communication may be implemented wireless, e.g. using SMS messages or WAP communication; in case of a personal computer, the communication may use known Internet communication, such as e-mail or instant messaging.

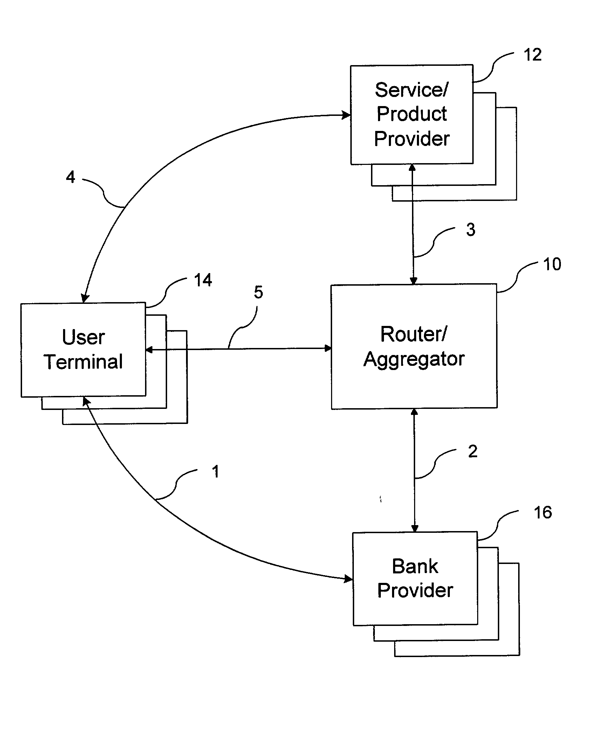

The first example situation concerns the first or initiating step of the present payment method, i.e. establishing the relationship between a user-defined key and one or more payment methods. This process is shown in Fig. 1. As starting situation, it is assumed that a user bank 16 can identify and authenticate a user who is using a user terminal 14 to contact the user bank 16. It is also assumed that the user bank 16 has knowledge about the possible payment methods of a user, ensuring that the user bank 16 only offers payment methods to the user it can or wants to offer. Payment methods may include normal banking accounts, credit card accounts, prepaid accounts (e.g. mobile telephony), electronic wallet, etc.

As an example, a customer, John Doe has a pre-paid mobile telephone 14 of Libertel, with phone number 06-999. Furthermore, John Doe has two accounts with the Rabobank 16 (1234 and 1235) and also a credit card with this bank 16 (4567, valid till 01/02). For the process of identification and authentication, John Doe uses Internet banking from the Rabobank and has a Rabobank Digipass. Interpay is the routing/aggregating party 10 in this example.

John Doe logs into the fixed line Internet banking site of Rabobank 16. By using the Digipass procedure, the Rabobank has identified John Doe using a challenge/response mechanism. Once logged on, John Doe can access the page where he can enter information required for the present payment method (called JACOB). First he enters his mobile phone number (06-999) and indicates in which way he wishes to receive the payment confirmations from Interpay 10. At present, it is possible to either receive SMS-messages or to view confirmations via WAP communication.

Next, John Doe selects one of his current accounts (1234) and credit card (4567) to be options in the payment process for high value payments, and selects his second account (1235) to be the payment method for wireless micro-payments. Also, John Doe creates a user-identification (JD-06-999) and a password ('secret') for Internet micro-payments, and indicates these should be charged to his second account (1235). Finally, John Doe selects his first account (1234) to be used for crediting. Also, John Doe selects a password for confirmation of high value payments (e.g. '2222') or alternatively, this password is created (at random) by the router/aggregator 10. The created password is then forwarded to the user, e.g. by using a sealed envelope. This way, the banking provider 16 is kept unaware of the confirmation password. Overall, John Doe is responsible for correctly entering and checking the information entered. The complete set of information entered by the user is then forwarded by the bank 16 (Rabobank) to the router/aggregator 10 Interpay.

The password for Internet payments (associated with the user identification) and the PIN-code for high value payments (associated with the user-defined key/telephone number) may be entered by the user or be generated randomly by the aggregator/router 10. At all times, the user may cancel registration at his banking provider 16 in whole or partly, e.g. to block payments from a selected account.

In a further embodiment, the banking provider 16 may include a further check by sending an SMS message to the user terminal 14 (in case of a mobile telephone) by using the user-defined key (the mobile telephone number). Only after receiving a reply from the mobile telephone 14, the banking provider is certain that the user has possession of that particular mobile telephone 14.

A further example relates to execution of a high value payment, i.e. uploading a prepaid balance at a mobile phone provider, Libertel. As John Doe only has a prepaid balance at Libertel, he is just a phone number to Libertel, and Libertel has no information on his address, bank account and credit worthiness. In this example, SMS-messages are used in the confirmation process as indicated in the above example.

John Doe calls a Libertel service number using his mobile telephone 14 and mentions that he wants to upload EUR 20 on his number 06-999. The provider 12 Libertel will issue a payment request to Interpay, the aggregator/router 10, via a secure line 3, the payment request comprising four entries. The user-defined key is 06-999, the amount is Eur 20, the description is 'upload prepaid', and the credit account is 8765 of Libertel with ING Bank (another banking company 16).

After receiving the payment request, Interpay 10 will send an SMS to the number 06-999 with the amount, description and the options as earlier indicated by John Doe (current account 1234 or credit card 4567) using the communication line 5. John Doe accepts the bill by replying to the SMS-message by entering his PIN-code (2222) and selecting the payment method (current account 1234). As no other telephone can reply to the SMS-message addressed to 06-999, Interpay 10 can verify that the mobile telephone 14 from which the reply is received is indeed 06-999, and Interpay 10 will verify that the PIN-code is correct. After this check, Interpay 10 will send a payment instruction to the Rabobank 16, the payment instruction comprising the debit account of John Doe (1234) and credit account of Libertel (8765) (and the amount and/or description). The Rabobank 16 will process this payment instruction, and when John Doe has sufficient balance on his account 1234, the Rabobank 16 will inform Interpay 10 that the payment is accepted. Subsequently, Interpay 10 will inform Libertel 12 that the payment has been processed and Libertel 12 will upload the prepaid account of 06-999 with EUR 20.

In this set-up, John Doe remains anonymous to service provider Libertel 12, and only John Doe can upload his prepaid phone balance, as the payment process requires both possession (the mobile telephone 14) and knowledge (the PIN-code). In addition to normal debit card transactions, John Doe can now select his choice of payment account. Libertel, as service/product provider 10, has now solved the fraud sensitivity of uploading prepaid balances.

Another example of a high value payment is the buying of a TV set from the merchant BCC 12 via its Internet site. For the merchant BCC 12, John Doe is an anonymous Internet user, it has no information on address, bank account and credit worthiness of John Doe. In this example, WAP is used in the confirmation process (and presumed selected by John Doe in the first example).

At the Internet site of BCC 12, John Doe selects that he wants to buy the TV set using the present payment method (JACOB) and enters his phone number (06-999) as user-defined. The Internet site of BCC 12 will issue a payment request to Interpay 10 via a secure line 3, comprising four entries, i.e. the user-defined key 06-999, the amount EUR 1000, the description 'TV' and credit account number 9887 of BCC with the Postbank (another banking company). As WAP has been selected for confirmation, John Doe logs in to the WAP application of Interpay 10, or Interpay 10 may send an OTAP (Over The Air Provisioning) message to the known phone number 06-999, after acceptation of which the Interpay application may be executed by the WAP enabled phone 14. Interpay 10 will identify the number of the calling telephone 14 using Calling Line Identification (CLI). In a menu, the WAP-application of Interpay 10 will present all bills for John Doe awaiting confirmation. After selecting the BCC bill, the WAP-application presents the details and a selectable OK button. After selecting the OK-button, the WAP-application prompts John Doe to enter his PIN-code and to select the desired payment method. In this case, John Doe selects the credit card account.

After verification of the PIN-code (2222), Interpay 10 will send a payment instruction to the credit card company 16, comprising the instruction to debit the credit card 4567 of John Doe and to credit the current account 9887 of BCC. The credit card company Mastercard 16 will process this instruction and inform Interpay 10 that the payment is accepted. Next, Interpay 10 will inform the BCC Internet site 12 that the payment has been processed, and BCC can then deliver the TV set to an address provided by John Doe.

It is possible to further increase security of the payment method, when the aggregator/router 10 is arranged to only receive (or process) payment requests from trusted service providers 12. A list of trusted service providers 12 may be generated once, or the list may be dynamically administered.

The present payment method can also be used to pay a number of small payments (or micro-payments). In the following examples, this will be demonstrated. It is assumed that through the interaction with the service provider 12, the user knows the price of a service. By using a mobile device 14, the service provider 12 becomes aware of the user-defined key of the user and is able to issue a payment request to the router/aggregator 10. For this micro-payment scheme to be effective, the aggregator/router 10 will determine which service providers 12 are allowed to issue payment requests using user-defined keys. For this, the router/aggregator 10 will compose a verification list of user-defined keys for a certain service provider 12, the users being associated with the user-defined keys being able to use the micro-payment scheme for that particular service provider 12.

The user-defined keys may again be (mobile) telephone numbers associated with a particular user terminal 14, or a combination of a user identification and password. The latter is particularly suited for Internet micro-payments.

The micro-payment scheme will be explained in more detail using a practical situation of an SMS lottery. John Doe has a post-paid telephone 14 with number 06-999 and wants to participate in the SMS lottery, in which a lottery ticket will cost Eur 1. For the service provider 12 providing the SMS lottery, John Doe is an anonymous gambler. There is no billing relationship between the lottery provider 12 and John Doe. The service provider 12 has been reviewed by the aggregator/router 10 (Interpay) and has been considered trustworthy. Interpay 10 has provided the verification list including John Doe's user-defined key 06-999 to the SMS lottery provider 12.

John Doe sends an SMS message to the SMS lottery that he wants to buy a lottery ticket. The SMS lottery provider 12 identifies that the phone number of the user terminal 14 is 06-999 from the details of the SMS message. The SMS lottery provider 12 verifies that this number is on the verification list and provides the lottery ticket number to John Doe's telephone 14. Furthermore, the SMS lottery provider 12 has registered the lottery ticket number and will create a payment request of Eur 1 for the user-defined key 06-999. This payment request is sent to Interpay 10, and comprises the user-defined key 06-999, the amount Eur 1, the description 'SMS lottery ticket 12345678' and the credit account number 8787 of SMS lottery with ABN AMRO bank 16.

Interpay, in its role as aggregator/router will aggregate all wireless micro-payments for John Doe, which will eventually result in a high value payment. Furthermore, Interpay 10 will aggregate all sold SMS lottery tickets to be credited to account 8787 of the SMS lottery. How the aggregated payments are settled with the banking providers 16 will be discussed later.

Fortunately, John Doe's SMS lottery ticket has won a prize of Eur 250. The SMS lottery provider 12 is able to find the user-defined key 06-999 associated with the winning ticket number from a database, and is able to confirm that the winning ticket was actually bought by John Doe. The SMS lottery provider 12 will then issue a payment request to Interpay 10, comprising the user-defined key 06-999, the amount Eur 250, the description 'SMS lottery ticket 12345678' and, in this case, debit account number 8787 of SMS lottery with ABN AMRO bank 16.

The router/aggregator 10 knows from its internal database, that for the purpose of credit payments to user-defined key 06-999, the amount should be paid to account 1234 with Rabobank 16. Interpay will thus issue a payment instruction to the ABN AMRO bank 16, which will process the payment instruction and inform Interpay 10 of the result of this payment instruction. The result may be a simple acknowledgement that the payment was processed in good order or that it was not processed. Interpay 10 may inform the SMS lottery provider 12 that the price has been paid to John Doe, and depending on the implementation may also inform John Doe, e.g. using an SMS message to his telephone 14, that he has won a price.

In general, the present method for micro-payments can also be used for crediting purposes, i.e. making payments from a service provider 12 to a user. This is possible because the service provider 12 is aware that the user-defined key is linked to a predetermined payment method, by means of a credit verification list comprising user-defined keys and associated accounts of users for crediting. This is clarified using the following example.

Tickets for a concert of Marco Borsato in the ArenA have been sold through many ticketing offices. John Doe is one of the persons who bought a ticket using the high value payment method described above. In the processed payment request, the description is 'Borsato ArenA Dec', and the payment request has been stored by the router/aggregator Interpay 10. For reimbursement of a cancelled concert, Marco Borsato will send a request to Interpay to create credit payment requests for all persons having paid for the concert. Interpay finds as one of the stored payment requests the one of John Doe: user-defined key 06-999, Amount Eur 100, description 'Borsato ArenA Dec', credit account 2734 of Uitbureau with ABN AMRO bank.

From the user-defined key 06-999, Interpay 10 determines the associated account 1234 of John Doe and sends a payment instruction to the ABN AMRO bank 16 to credit the account of John Doe for the proper amount. It is also possible that John Doe has indicated that for credit payments a number of selectable accounts may be used. If this is the case, the router/aggregator Interpay 10 will communicate with the user terminal 14 of John Doe (using SMS messages or WAP communication) to receive the selection of John Doe.

The ABN AMRO bank 16 will process the payment instruction and will inform Interpay 10 of the result (payment processed or payment not processed). Then, Interpay 10 will send an acknowledgement to the service provider Uitbureau 12 that the refund has been paid to John Doe, and if desired, also an acknowledgement to the user terminal 14 of John Doe (using the user-defined key).

Another example of micro-payments may be the provisioning of news through a WAP-portal. The service provider KPN 12 provides through its portal (M-info) news headlines from the news provider 12 De Telegraaf for a price of Eur 0.10. For both service providers, KPN and De Telegraaf, John Doe is an anonymous user, having no billing relation. KPN's portal 12 has been reviewed by Interpay 10 and has also received a verification list of user-defined keys.

Using his mobile telephone 14, John Doe selects the option Headlines via the menu of M-info. In the user interface the price (Eur 0.10) is mentioned. KPN identifies that the phone number of the mobile telephone 14 is 06-999 using Calling line Identification (CLI). KPN 12 verifies that the number 06-999 is on the verification list and will pass the request for news headlines to news provider De Telegraaf 12. De Telegraaf 12 passes the information to the provider KPN 12, which forwards the information to the mobile telephone 14 of John Doe. The provider KPN 12 has registered the delivery of the news headlines and will create a billing record of Eur 0.10. A payment request is forwarded to Interpay 10, comprising the user-defined key 06-999, the amount Eur 0.10, the description 'Telegraaf News Headlines' and credit account number 8113 of KPN with ABN AMRO Bank 16. (Note that it is also possible to use a credit account of De Telegraaf in this case).

The aggregator/router Interpay 10 will aggregate all wireless micro-payments for John Doe, eventually resulting in a high value payment. The same is done for the account of KPN 12 (or De Telegraaf 12).

Micro-payments may also be implemented using Internet communication. In this case, it is preferred that the user-defined key is a combination of a user identification and a password.

As described before, John Doe has registered for Internet micro-payments at his banking provider 16 with user identification 'JD-06-999' and password 'secret'. At some point in time, John Doe wants to retrieve estate information from the Kadaster 12. For the Kadaster 12, John Doe is an anonymous user and no information on address, bank account and credit worthiness is available to the Kadaster 12.

The Kadaster 12 is reviewed by the aggregator/router Interpay 10, but has not been selected as a trustworthy partner. This role is provided by a Trusted Third Party TWYP 12, which in this payment scheme is also considered to be a service/product provider 12. Interpay 10 has provided a verification list to the TTP TWYP 12, in which the combination 'JD-06-999' and 'secret' is included. Only trusted service providers 12, such as TWYP will have access to the information on the verification list, thereby increasing the security of the Internet micro-payment method.

John Doe uses the Internet, e.g. from a personal computer 14, for his request for estate information from the Kadaster 12. For the payment details, John Doe will be redirected to the site of TWYP 12 where he enters the user identification and password. By entering this information, John Doe accepts the charge of Eur 1. The TTP TWYP 12 verifies that the combination of 'JD-06-999' and 'secret' is actually on the verification list and will inform the Kadaster 12 on the result of this verification. Based on this verification, the Kadaster 12 will provide the information requested by John Doe. Furthermore, TWYP 12 will issue a payment request to Interpay 10, comprising the user-defined key 'JD-06-999'/'secret', the amount Eur 1, the description 'Estate information Kadaster' and the credit account 4153 of TWYP 12 with ING Bank 16. Then, Interpay will aggregate the payments for the user accounts and the provider accounts in order to arrive at high value payments.

For micro-payments (both wireless and Internet micro-payments) the payment requests will be aggregated by the aggregator/router 10. As the value of micro-payments are too small for clearing and a user will generally prefer one transaction for all micro-payments in stead of many detail transactions, the micro-payments are aggregated. The function of aggregating is performed by the aggregator/router 10 depicted in Fig. 1, which in an ideal case will process the payment requests of many service providers 12 in order to arrive at high values. The aggregation process may include several business rules regarding the decision of the moment suitable for aggregation and settling of the accounts. A possible business rule may be based on time, e.g. that at the end of each month, all micro-payments are aggregated and settled. Alternatively, the micro-payments may be settled on reaching a predetermined limit amount.

In the next example shown, two users and two service providers 12 are mentioned, although it will be clear that the example may be extended for multiple users and service providers 12.

| **Provider 12** | **User 14** | **Service** | **Amount** | **Scheme** |
|---|---|---|---|---|
| Provider 1 | Customer A | Service P | X1 | Wireless |
| Provider 1 | Customer A | Service Q | X2 | Internet |
| Provider 1 | Customer A | Service R | X3 | Wireless |
| Provider 1 | Customer B | Service S | X4 | Wireless |
| Provider 2 | Customer A | Service T | X5 | Wireless |
| Provider 2 | Customer B | Service T | X6 | Wireless |
| Provider 2 | Customer B | Service U | X7 | Wireless |

The identification of the user 14 is the user-defined key provided by the service provider 12 (telephone number or user identification/password combination as described in the examples above). The provider 12 is known to the aggregator/router 10 as this is the party that sent the payment request. The scheme is known either from information received from the service provider 12 or from the used user-defined key.

The payment instructions for the user 14 are available to the aggregator/router 10 as received in the initialising steps of the present method. The payment instructions for the service provider 12 may be included in the payment request or made available to the aggregator/router 10, e.g. as part of the process of verifying the trustworthiness of the service providers 12.

The amounts are summed for a specific user 14 or service provider 12 and a specific scheme for services:

| **Party** | **Scheme** | **Debit/credit** | **Payment method** | **amount** |
|---|---|---|---|---|
| Customer A | Wireless | Dt | Credit card acc | X1+X3+X5 |
| Customer A | Internet | Dt | Bank acc 1234 | X2 |
| Customer B | Wireless | Dt | Bank acc 1235 | X4+X6+X7 |
| Provider A | All | Ct | Provided in requests | X1+X2+X3+X4 |
| Provider B | all | Ct | Standing instruction | X5+X6+X7 |

As the amounts are only balanced in totals, an additional temporary account may be used by the aggregator/router 10. First, the debit amounts are credited to the temporary account and subsequently, the credit amounts are paid from the temporary account.

As shown in the above example, the total number of payments is drastically reduced and the value of the payments is higher and thus more suitable for clearing. The added value of aggregation depends on the activity of the users: higher activity will lead to more payment requests and this will lead to higher value payments. Having a separate party 10 for delivering the payment requests to the banking providers 16 reduces the burden for the service providers 12 to implement the actual interfaces to the individual banking providers 16. Also, customer relationship management tools may be used to identify frequent users and reward them with loyalty schemes, bonuses or discounts.

For the person skilled in the art, it will be clear that the examples described above are only illustrative examples, not meant to limit the scope of this patent, which is defined by the appended claims.

## Claims

1. Method for payment of a service and/or product from a service provider (12) by a user, comprising the steps of
a) receiving from a bank provider (16) associated with the user an information message, the information message comprising a user-defined key;
b) receiving from the service provider (12) a payment request comprising the user-defined key;
c) processing the payment request.

2. Method according to claim 1, in which the information message further comprises at least one payment category and for each payment category at least one associated payment method.

3. Method according to claim 1 or 2, in which the user-defined key comprises a telephone number and optionally a PIN-code.

4. Method according to claim 1 or 2, in which the user-defined key comprises a user-identification and a password.

5. Method according to one of the claims 1 through 4, in which the at least one payment category is selected from the group comprising high value payments, mobile micro-payments, Internet micro-payments and crediting payments.

6. Method according to one of the claims 1 through 5, in which the at least one associated payment method is a credit card account or a debit account.

7. Method according to one of the claims 1 through 6, comprising the further step of storing all payment requests.

8. Method according to one of the claims 1 through 7, in which the payment request further comprises an amount to be paid and a bank account of the service provider, and the step of processing the payment request comprises the steps of:
c1) sending an acknowledgement message to the user using the user-defined key to address the user, the acknowledgement message comprising the amount, and selectable payment methods associated with the user-defined key;
c2) after receiving a first acknowledgement and/or the selection of payment method from the user, sending a payment instruction to the banking provider (16) associated with the selected payment method, the payment instruction comprising the amount, selected payment method and the bank account of the service provider (12);
c3) after receiving a second acknowledgement from the banking provider (16), sending a third acknowledgement to the service/product provider and/or user.

9. Method according to claim 8, in which the payment request, acknowledgement message and/or payment instruction further comprise a description of the service and/or product.

10. Method according to claim 8 or 9, in which the acknowledgement message is communicated to the user using at least one SMS message or using WAP communication.

11. Method according to one of the claims 8, 9 or 10, in which step c2) comprises the further steps of receiving an identification from the user and checking whether the user-defined key and identification are associated.

12. Method according to one of the claims 1 through 7, in which the method comprises the further step of
a1) after receiving the information message sending a verification list to the at least one service provider (12) by a router/aggregator (10), the verification list comprising user-defined keys which are allowed to order services from the at least one service provider (12);
the payment request further comprising an amount to be paid and a provider account;
and the step of processing the payment request comprises the steps of:
c1) aggregating payments on payment methods associated with the user-defined key;
c2) aggregating payments on provider accounts;
c3) settling the aggregated payments by sending payment instructions to banking providers (16) associated with the payment methods and provider accounts.

13. Method according to claim 12, in which the step c3 is executed once a predetermined amount has been reached or a predetermined time period has lapsed.

14. Method according to claim 12 or 13, in which step c3 is executed using a temporary account.

15. Method according to claim 12, 13 or 14, in which the payment request and/or payment instruction further comprise a description of the service and/or product.

16. Method for payment of services and/or products from a service provider (12) by a user, comprising the steps of
a) identifying and authenticating the user by a bank provider;
b) receiving from the user by the banking provider (16) a user-defined key;
c) receiving from the user by the banking provider (16) at least one payment method for each of at least one payment category;
d) sending an information message to a router (10), the information message comprising the user-defined key;
e) receiving a payment instruction from the router (10) and executing the payment instruction.

17. Method according to claim 16, in which the information message further comprises at least one payment category and for each payment category at least one associated payment method.

18. Method according to claim 16 or 17, in which the user-defined key comprises a telephone number and optionally a PIN-code.

19. Method according to claim 16 or 17, in which the user-defined key comprises a user-identification and a password.

20. Method according to one of the claims 16 through 19, in which the at least one payment category is selected from the group comprising high value payments, mobile micro-payments, Internet micro-payments and crediting payments.

21. Method according to one of the claims 16 through 20, in which the at least one associated payment method is a credit card account or a debit account.

22. Method according to one of the claims 16 through 21, further comprising the step of receiving a desired communication method for communication with the router (10), the desired communication message being included in the information message.

23. Method according to claim 22, in which the desired communication method is voice response messages, SMS messages or WAP communication.

24. Method for payment of services and/or products from a service provider by a user, comprising the steps of
a) receiving a verification list from a router (10), the verification list comprising at least one user-defined key;
b) receiving a service/product request and a user-defined key from a user;
c) checking whether the user-defined key is on the verification list;
d) upon verification of the user-defined key:
d1) providing the service/product to the user;
d2) sending a payment request to the router (10), the payment request comprising the user-defined key, an amount, and a provider account number of the at least one service/product provider.

25. Method according to claim 24, in which the information message further comprises at least one payment category and for each payment category at least one associated payment method.

26. Method according to claim 24 or 25, in which the user-defined key comprises a telephone number and optionally a PIN-code.

27. Method according to claim 24 or 25, in which the user-defined key comprises a user-identification and a password.

28. Method according to one of the claims 24 through 27, in which the at least one payment category is selected from the group comprising high value payments, mobile micro-payments, Internet micro-payments and crediting payments.

29. Method according to one of the claims 24 through 28, in which the at least one associated payment method is a credit card account or a debit account.

30. Software program comprising computer executable instructions, the computer executable instructions comprising the steps of the payment method according to one of the claims 1 through 29.

31. Software program product comprising computer readable instructions, which when loaded on a processing system allows the processing system to execute the method of one of the claims 1 through 29.

32. Payment system comprising processing means, storage means, and interface means, in which the processing means, storage means and interface means are arranged to execute the method according to one of the claims 1 through 29.
